# EUROPEAN PATENT SPECIFICATION

(11) **EP 3 477 908 B1**
(45) Date of publication and mention of the grant of the patent: **11.08.2021**
(21) Application number: 17842873.6
(22) Date of filing: 21.08.2017
(51) Int. Cl.: H04L 29/06, H04L 29/08

(54) **METHODS FOR INDICATING DIVISION MANNER OF PROTOCOL LAYER**
VERFAHREN ZUR ANZEIGE EINER TEILUNGSART EINER PROTOKOLLSCHICHT
PROCÉDÉS PERMETTANT D'INDIQUER UNE MÉTHODE DE DIVISION DE COUCHE DE PROTOCOLE

(30) Priority: 26.08.2016 CN 201610741693
(43) Date of publication of application: 01.05.2019
(73) Proprietor: Huawei Technologies Co., Ltd., Longgang District Shenzhen, Guangdong 518129 (CN)
(72) Inventor: JIA, Xiaoqian, Shenzhen Guangdong 518129 (CN); LUO, Haiyan, Shenzhen Guangdong 518129 (CN)
(74) Representative: Epping - Hermann - Fischer
(86) International application number: PCT/CN2017/098282
(87) International publication number: WO 2018/036450

(56) References cited:
- CN-A- 104 469 814
- CN-A- 104 469 960
- CN-A- 106 538 037
- US-A1- 2011 151 924
- US-A1- 2011 228 749
- CATT: "Control plane for support of NR standalone operation", 3GPP DRAFT; R2-163468 CP FOR STANDALONE NR, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Nanjing, China; 20160523 - 20160527 14 May 2016 (2016-05-14), XP051095423, Retrieved from the Internet: URL:http://www.3gpp.org/ftp/tsg_ran/WG2_RL 2/TSGR2_94/Docs/ [retrieved on 2016-05-14]
- SAMSUNG: "Consideration on the deployment of function split in CU and DU", 3GPP DRAFT; R3-161647, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG3, no. Gothenburg; 20160822 - 20160826 21 August 2016 (2016-08-21), XP051127498, Retrieved from the Internet: URL:http://www.3gpp.org/ftp/Meetings_3GPP_ SYNC/RAN3/Docs/ [retrieved on 2016-08-21]
- CATT: 'R2-163468 Control Plane for Support of NR Standalone Operation' 3GPPTSG RAN WG2 MEETING #94 27 May 2016, XP051095423

## Description

### TECHNICAL FIELD

This application relates to wireless communications technologies, and in particular, to a protocol layer distribution indication method.

### BACKGROUND

A cloud radio access network (Cloud Radio Access Network, C-RAN) is a new type of radio access network architecture put forward based on an existing network condition and a trend in technical progress. Specifically, the C-RAN is a clean radio access network architecture (Clean System) based on centralized processing (Centralized Processing), collaborative radio (Collaborative Radio), and a real-time cloud computing infrastructure (Real-time Cloud Infrastructure). Essence of the C-RAN is to reduce a quantity of base station equipment rooms, reduce energy consumption, and use a cooperative virtualization technology to implement resource sharing and dynamic scheduling and improve spectral efficiency, so as to implement low-cost, high-bandwidth, and high-flexibility operation. In the C-RAN, a central unit (Central Unit, CU) is connected to a plurality of distributed units (Distributed Unit, DU), and each protocol layer entity may be distributed to the DU or the CU.

The 3rd Generation Partnership Project (3rd Generation Partnership Project, 3GPP) relates to more high-layer distribution. After the C-RAN is introduced to the 3GPP, there is still no proper protocol layer distribution method.

US 2011/151924 A1 discloses a method for supporting a service session for a wireless user device including receiving a service request associated with the wireless user device, determining at least one characteristic of the service request, and selecting, using the at least one characteristic of the service request, one of a plurality of network layers available for supporting a service session for the service request. A network layer has a wireless access technology associated therewith and, optionally, also may have a core network technology associated therewith. The selection of the network layer for a service request may be performed within the network or performed at the wireless user device under the control of the network.

US 2011/228749 A1 discloses a method to seamlessly support data flows over multiple networks using different radio protocols. The method may include supporting a data flow over a wireless link using a first radio protocol, enabling a second radio protocol for the data flow, based on one or more parameters, selecting at least one of the first radio protocol or the second radio protocol to support the data flow over the wireless link, while maintaining the data flow over the wireless link, and communicating the data flow over the wireless link using the selected at least one of the first radio protocol or the second radio protocol.

CATT, "Control plane for support of NR standalone operation", vol. RAN WG2, no. Nanjing, China; 20160523 - 20160527, (20160514), 3GPP DRAFT; R2-163468 CP FOR STANDALONE NR, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, URL: http://www.3gpp.org/ftp/tsg_ran/WG2_RL2/TSGR2_94/Docs/, (20160514) discloses, that 5G NR sets out a set of requirements which requires support of new control plane functionalities. 5G requirements for control plane design, new control plane functionalities and potential control plane stack for 5G NR are analyzed. NR is also required for the support of flexible functionality split of protocol based on user cases as well as the support of RAN slices. Flexible protocol functionality split may result in some protocols to be located at a central unit (CU) and a distributed unit (DU).

SAMSUNG, "Consideration on the deployment of function split in CU and DU", vol. RAN WG3, no. Gothenburg; 20160822 - 20160826, (20160821), 3GPP DRAFT; R3-161647, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, URL: http://www.3gpp.org/ftp/Meetings_3GPP_SYNC/RAN3/Docs/, (20160821) discloses function split between central unit and distributed unit based on the LTE protocol is implemented considering practical deployment restrictions.

### SUMMARY

This application provides a protocol layer distribution indication method, to provide a dynamic and flexible protocol layer distribution method according to the claims.

### BRIEF DESCRIPTION OF DRAWINGS

FIG. 1 is a schematic diagram of a network architecture of a protocol layer distribution indication method according to this application;
FIG. 2 is a schematic structural diagram of protocol layers;
FIG. 3 is a schematic flowchart of a protocol layer distribution indication method according to this application;
FIG. 4 is a schematic flowchart of another protocol layer distribution indication method according to this application;
FIG. 5 is a schematic flowchart of another protocol layer distribution indication method according to this application;
FIG. 6 is a schematic structural diagram of a protocol layer distribution indication apparatus according to this application;
FIG. 7 is a schematic structural diagram of another protocol layer distribution indication apparatus according to this application;
FIG. 8 is a schematic structural diagram of another protocol layer distribution indication apparatus according to this application;
FIG. 9 is a schematic structural diagram of another protocol layer distribution indication apparatus according to this application; and
FIG. 10 is a schematic structural diagram of another protocol layer distribution indication apparatus according to this application.

### DESCRIPTION OF EMBODIMENTS

A base station, also referred to as a radio access network (Radio Access Network, RAN) device, is a device that connects a terminal to a radio network. The base station may be a base transceiver station (Base Transceiver Station, BTS) in a Global System for Mobile Communications (Global System for Mobile Communications, GSM) or Code Division Multiple Access (Code Division Multiple Access, CDMA), or may be a NodeB (NodeB, NB) in Wideband Code Division Multiple Access (Wideband Code Division Multiple Access, WCDMA), or may be an evolved NodeB (Evolved NodeB, eNB or eNodeB) in Long Term Evolution (Long Term Evolution, LTE), a relay node or an access point, a base station in a future 5G network, or the like. No limitation is imposed herein.

A terminal may be a wireless terminal or a wired terminal. The wireless terminal may be a device that provides a user with voice and/or other service data connectivity, a handheld device with a wireless connection function, or another processing device connected to a wireless modem. The wireless terminal may communicate with one or more core networks by using a radio access network (Radio Access Network, RAN). The wireless terminal may be a mobile terminal such as a mobile phone (also referred to as a "cellular" phone) and a computer with a mobile terminal, for example, may be a portable, pocket-sized, handheld, computer built-in, or in-vehicle mobile apparatus that exchanges voice and/or data with the radio access network. For example, the wireless terminal may be a device such as a personal communications service (Personal Communications Service, PCS) phone, a cordless telephone set, a Session Initiation Protocol (Session Initiation Protocol, SIP) phone, a wireless local loop (Wireless Local Loop, WLL) station, or a personal digital assistant (Personal Digital Assistant, PDA). The wireless terminal may also be referred to as a system, a subscriber unit (Subscriber Unit), a subscriber station (Subscriber Station), a mobile station (Mobile Station), a mobile console (Mobile), a remote station (Remote Station), a remote terminal (Remote Terminal), an access terminal (Access Terminal), a user terminal (User Terminal), a user agent (User Agent), or a user device (User Device or User Equipment). No limitation is imposed herein.

"A plurality of' in this application means two or more than two. The term "and/or" describes an association relationship for describing associated objects and represents that three relationships may exist. For example, A and/or B may represent the following three cases: Only A exists, both A and B exist, and only B exists. The character "/" usually indicates an "or" relationship between the associated objects.

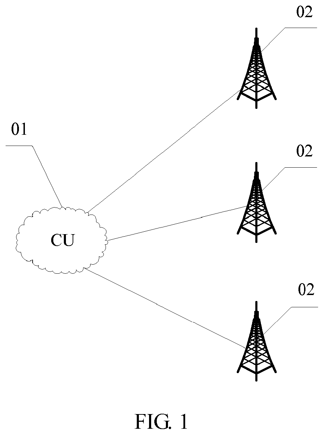

FIG. 1 is a schematic diagram of a network architecture of a protocol layer distribution indication method according to this application. This application may be applied to a C-RAN architecture, but is not limited thereto. As shown in FIG. 1, the network architecture includes a CU 01 and DUs 02. One CU 01 is communicatively connected to a plurality of DUs 02.

Both the CU and the DUs may be integrated into a base station. This is not limited herein.

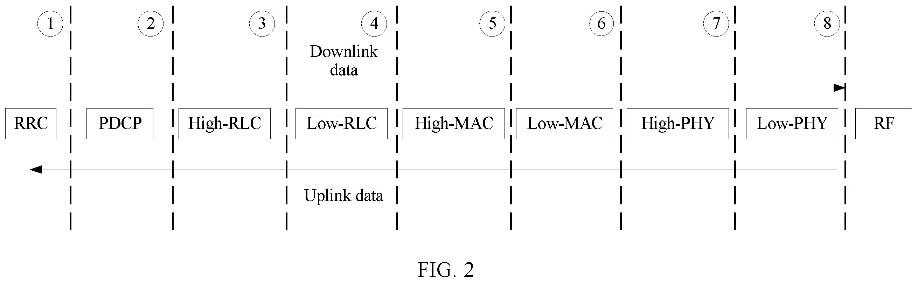

FIG. 2 is a schematic structural diagram of protocol layers. Eight protocol layers are used as an example in this embodiment. The eight protocol layers may include a radio resource control (Radio Resource Control, RRC) layer, a Packet Data Convergence Protocol (Packet Data Convergence Protocol, PDCP) layer, a high-layer Radio Link Control (Radio Link Control) layer (denoted as a high-RLC layer), a low-layer RLC layer (denoted as a low-RLC layer), a high-layer Media Access Control (Media Access Control, MAC) layer (denoted as a high-MAC layer), a low-layer MAC layer (denoted as a low-MAC layer), a high-layer physical layer (Physical Layer, PHY) (denoted as a high-PHY layer), and a low-layer PHY layer (denoted as a low-PHY layer).

As shown in FIG. 2, downlink transmission data is sequentially processed at the RRC layer to the low-PHY layer, and is finally sent by using a radio frequency (Radio Frequency, RF) antenna. After being received by using an RF antenna, uplink transmission data is sequentially processed at the low-PHY to the RRC layer.

In this embodiment, the foregoing protocol layer entities may be distributed to a CU and a DU, and there may be eight specific distribution manners shown in Table 1, but no limitation is imposed thereto.

**Table 1**

| **Protocol Layer Distribution Identifier** | **Protocol Layer Distribution Manner** |
|---|---|
| 1 | The RRC layer is distributed to a CU, and all layers below the RRC are distributed to a DU. |
| 2 | The PDCP layer and a layer above the PDCP layer are distributed to the CU, and all layers below the PDCP layer are distributed to the DU. |
| 3 | The high-RLC layer and a layer above the high-RLC layer are distributed to the CU, and all layers below the high-RLC layer are distributed to the DU. |
| 4 | The low-RLC layer and a layer above the low-RLC layer are distributed to the CU, and all layers below the low-RLC layer are distributed to the DU. |
| 5 | The high-MAC layer and a layer above the high-MAC layer are distributed to the CU, and all layers below the high-MAC layer are distributed to the DU. |
| 6 | The low-MAC layer and a layer above the low-MAC layer are distributed to the CU, and all layers below the low-MAC layer are distributed to the DU. |
| 7 | The high-PHY layer and a layer above the high-PHY layer are distributed to the CU, and all layers below the high-PHY layer are distributed to the DU. |
| 8 | The low-PHY layer and a layer above the low-PHY layer are distributed to the CU. |

In addition to the foregoing eight distribution manners, another protocol layer combination and distribution manner may also be defined. No limitation is imposed herein.

The protocol layer distribution manner shown in Table 1 may be preconfigured by OAM, or may be specified by a related protocol.

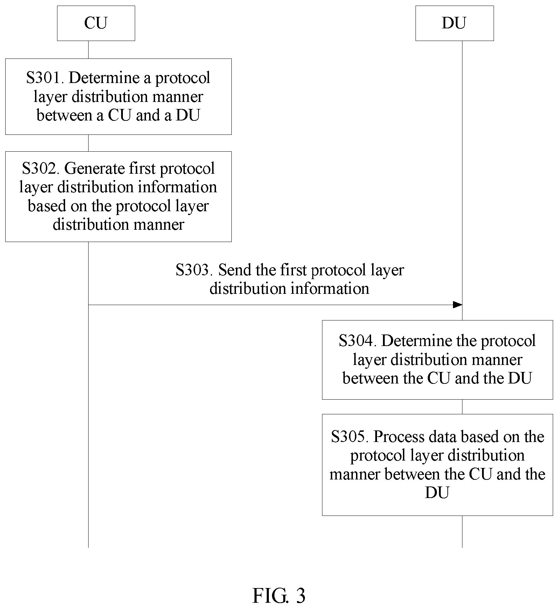

FIG. 3 is a schematic flowchart of a protocol layer distribution indication method according to this application. As shown in FIG. 3, the method includes the following steps.

S301. A CU determines a protocol layer distribution manner between the CU and a DU.

The CU may determine the protocol layer distribution manner between the CU and the DU based on a specific situation, a preset condition, or the like. Specifically, the protocol layer distribution manner may be selected from the plurality of distribution manners shown in Table 1, and certainly is not limited to Table 1.

Optionally, after determining the protocol layer distribution manner between the CU and the DU, the CU enables a corresponding protocol layer functional entity to process data. For example, when the protocol layer distribution manner determined by the CU is the distribution manner "3" shown in Table 1, the CU enables protocol layer entities at a high-RLC layer and at a layer above the high-RLC layer to process data.

S302. The CU generates first protocol layer distribution information based on the protocol layer distribution manner.

S303. The CU sends the first protocol layer distribution information to the DU. The DU receives the first protocol layer distribution information sent by the CU.

S304. The DU determines the protocol layer distribution manner between the CU and the DU based on the first protocol layer distribution information.

S305. The DU processes data based on the protocol layer distribution manner between the CU and the DU.

After receiving the first protocol layer distribution information, the DU may enable a corresponding protocol layer functional entity based on the protocol layer distribution manner indicated by the first protocol layer distribution information.

For example, if the protocol layer distribution manner indicated by the first protocol layer distribution information is the distribution manner "3" shown in Table 1, the DU enables protocol layer functional entities corresponding to all protocol layers below the high-RLC layer.

Herein, interaction between the CU and one DU communicatively connected to the CU is used as an example for description. The CU performs same interaction with another DU communicatively connected to the CU.

In this embodiment, the CU determines the protocol layer distribution manner between the CU and the DU, further generates the first protocol layer distribution information based on the protocol layer distribution manner, and sends the first protocol layer distribution information to the DU, so that the protocol layer distribution manner can be dynamically determined, and dynamically notified to the DU. The DU may also change a protocol layer distribution in a timely manner based on the received first protocol layer distribution information.

In a specific implementation process, the CU may send the first protocol layer distribution information to the DU in a plurality of manners, or may send the first protocol layer distribution information to the DU in different occasions.

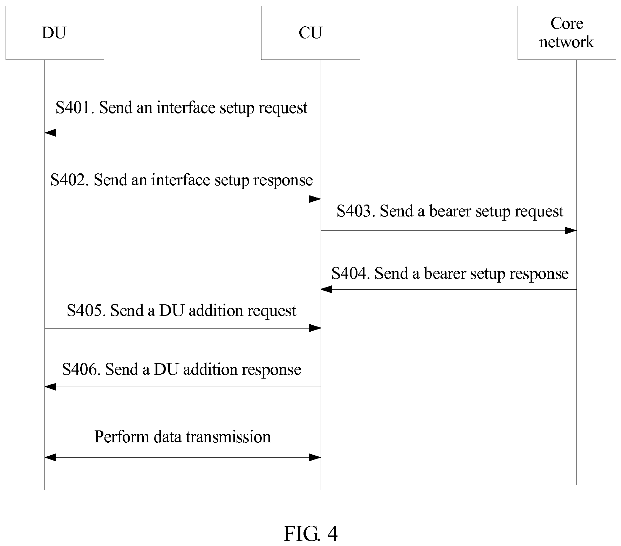

FIG. 4 is a schematic flowchart of another protocol layer distribution indication method according to this application. In this embodiment, a CU adds first protocol layer distribution information to an interface setup request or an interface update request. Referring to FIG. 4, the interface setup request is used as an example (all of the following interface setup requests may be replaced with the interface update request), and the method includes the following steps.

S401. The CU sends the interface setup request to a DU, where the interface setup request includes first protocol layer distribution information.

S402. The DU sends an interface setup response to the CU.

Further, an interface between the CU and the DU is set up. Specifically, the interface may be an XCRAN interface. No limitation is imposed herein.

S403. The CU sends a bearer setup request to a core network.

S404. The core network sends a bearer setup response to the CU.

The bearer setup response carries bearer setup-related information.

S405. The CU sends a DU addition request (DU addition request) to the DU, where the DU addition request carries bearer setup-related information.

S406. The DU sends a DU addition response (DU addition response) to the CU.

After bearer setup between the CU and the DU is completed, a data packet may be transmitted. Optionally, when determining a protocol layer distribution manner, the CU may determine to perform protocol layer distribution based on quality level information.

The first protocol layer distribution information includes a mapping relationship between quality level information and protocol layer distribution information.

The quality level information may be a QCI (QoS Class Identifier), and a QCI and a mapping relationship between a quality of service (Quality of Service, QoS) parameter and the QCI are specified in a protocol.

For details of the interface setup request, refer to Table 2.

**Table 2**

| **Information Element (IE)/Group Name (Group Name)** |
|---|
| Information type |
| CU identifier |

| **Serving Cell** |
|---|
| >Serving cell information |

| **Protocol layer Distribution Information Table** |
|---|
| >Mapping relationship between a QCI and protocol layer distribution information |
| >>QC1 |
| >>Protocol layer distribution information |

It can be learned that the interface setup request in Table 2 includes a protocol layer distribution information table, and the protocol layer distribution information table includes a mapping relationship between a QCI and protocol layer distribution information. Protocol layer distribution information corresponding to different QCIs is specifically recorded in the mapping relationship.

The mapping relationship between the QCI and the QoS parameter may be shown in Table 3.

**Table 3**

| **QCI** | **Resource Type** | **Priority** | **Data Packet Latency** | **Packet Loss Rate** |
|---|---|---|---|---|
| 1 (NOTE 3) | GBR | 7 | 100 ms | 10⁻² |
| 2 (NOTE 3) | | 4 | 150 ms | 10⁻³ |
| 3 (NOTE 3) | | 3 | 50 ms | 10⁻³ |
| 4 (NOTE 3) | | 5 | 300 ms | 10⁻⁶ |
| 5 (NOTE 3) | Non-GBR | 1 | 100 ms | 10⁻⁶ |
| 6 (NOTE 4) | | 6 | 300 ms | 10⁻⁶ |
| 7 (NOTE 3) | | 7 | 100 ms | 10⁻³ |
| 8 (NOTE 5) | | 8 | 300 ms | 10⁻⁶ |
| 9 (NOTE 6) | | 9 | | |

A GBR is a guaranteed bit rate (Guaranteed Bit Rate), and represents a minimum bit rate, guaranteed by a system, of a bearer.

Each QCI corresponds to a group of QoS parameters in the following.

After the bearer setup between the CU and the DU is completed, the DU may determine a corresponding QCI based on a current QoS parameter, and further obtain corresponding protocol layer distribution information based on the mapping relationship between the QCI and the protocol layer distribution information, so as to determine the protocol layer distribution manner. For example, the protocol layer distribution information is a protocol layer distribution identifier. If the protocol layer distribution identifier is "2" shown in Table 2, the DU may determine that the current protocol layer distribution manner is "A PDCP layer and a layer above the PDCP layer are distributed to the CU, and all layers below the PDCP layer are distributed to the DU". Optionally, a protocol layer distribution may be at a slice level. The first protocol layer distribution information includes a mapping relationship between slice information and protocol layer distribution information.

The CU can determine that different slices correspond to different protocol layer distribution. After the CU sends the first protocol layer distribution information to the DU and the bearer setup between the CU and the DU is completed the DU can determine a protocol layer distribution manner based on specific slice information and the mapping relationship between the slice information and the protocol layer distribution information, and process data based on the protocol layer distribution manner.

Optionally, the interface setup request may alternatively be shown in Table 4.

**Table 4**

| **IE/Group Name** |
|---|
| Information type |
| CU identifier |

| **Serving Cell** |
|---|
| >Serving cell information |

| **Protocol Layer Distribution Information Table** |
|---|
| >Mapping relationship between slice information and protocol layer distribution information |
| >>Slice information |
| >>Protocol layer distribution information |

It can be learned that the interface setup request in Table 4 includes a protocol layer distribution information table, and the protocol layer distribution information table includes a mapping relationship between slice information and protocol layer distribution information. Protocol layer distribution information corresponding to different slice information is specifically recorded in the mapping relationship.

A network slice is a slice selected depending on a requirement of an operator or a user, and different network slice requirements (network slice instance) are used to support different services or different tenants.

The slice information herein may be a slice identifier (slice ID) or a slice parameter (slice parameters). The slice ID may be specified by a protocol, may be specified by a network management system (for example, Operation Administration and Maintenance, OAM), or may be specified by an interface between the CU and the DU. No limitation is imposed herein. For example, slice ID = 1 represents a specific service of a particular tenant. The slice parameter may include tenant (tenancy) specific information, service type information, or the like.

Optionally, the CU may alternatively determine the protocol layer distribution manner between the CU and the DU at a CU level or a DU level.

If the CU determines the protocol layer distribution manner at the CU level, a plurality of DUs communicatively connected to the CU use the same protocol layer distribution manner. If the CU determines the protocol layer distribution manner at the DU level, a plurality of DUs communicatively connected to the CU may use the same protocol layer distribution manner or different protocol layer distribution manners.

Optionally, for the CU level, when determining the protocol layer distribution manner between the CU and the DU, the CU may determine the protocol layer distribution manner between the CU and the DU based on a mapping relationship between the CU and a protocol layer distribution manner.

The mapping relationship between the CU and the protocol layer distribution manner may be preset in the CU. The mapping relationship between the CU and the protocol layer distribution manner may specifically include a CU ID and a corresponding protocol layer distribution identifier. The CU may determine the corresponding protocol layer distribution identifier based on the ID of the CU, and further packetize the corresponding protocol layer distribution identifier to generate first protocol layer distribution information.

The interface setup request may be shown in Table 5.

**Table 5**

| **IE/Group Name** |
|---|
| Information type |
| CU ID |

| **Serving Cell** |
|---|
| >Serving cell type |

| **Protocol Layer Distribution Information** |
|---|
| >Protocol layer distribution ID |

It can be learned that the interface setup request carries a CU identifier (CU ID), and corresponding protocol layer distribution information carries a protocol layer distribution ID. Optionally, for the DU level, the CU determines the protocol layer distribution manner between the CU and the DU based on a mapping relationship between the DU and a protocol layer distribution manner.

Specifically, the mapping relationship between the DU and the protocol layer distribution manner may be preset in the CU, and the mapping relationship between the DU and the protocol layer distribution manner includes a DU ID and a corresponding protocol layer distribution ID. The CU can determine, based on an ID of a DU communicatively connected to the CU, a protocol layer distribution ID corresponding to each DU; and further generate corresponding first protocol layer distribution information, and send the first protocol layer distribution information to a corresponding DU. In this case, protocol layer distribution information received by each DU is protocol layer distribution information corresponding to the DU.

The first protocol layer distribution information is similar to that in Table 5. Based on Table 5, the first protocol layer information further carries a DU ID of the DU that receives the first protocol layer distribution information.

In another embodiment, the DU addition request carries the first protocol layer distribution information. A specific method process is the same as that shown in FIG. 4. The interface setup request in S401 no longer includes the first protocol layer distribution information, but the first protocol layer distribution information is included in the DU addition request in S405. Optionally, the first protocol layer distribution information includes a first protocol layer distribution indication, and the first protocol layer distribution indication is used to indicate a currently used protocol layer distribution manner to the DU.

Different from the foregoing embodiment, a mapping relationship is not sent herein. Instead, an indication is directly carried. After receiving the first protocol layer distribution information, the DU directly determines the protocol layer distribution manner based on the first protocol layer distribution indication.

The first protocol layer distribution indication may be the protocol layer distribution identifier (protocol layer distribution ID) shown in Table 1, or may be other information used to indicate the protocol layer distribution identifier. No limitation is imposed herein.

Optionally, the CU may determine the protocol layer distribution manner based on a terminal to be served. To be specific, the CU may determine the protocol layer distribution manner based on an identifier of the terminal to be served and a mapping relationship between the terminal and a protocol layer distribution manner. For example, when terminal ID = 0, protocol layer distribution ID = 4; or when terminal ID = 1, protocol layer distribution ID = 5.

The DU addition request further includes information about the terminal to be served, for example, the ID of the terminal to be served.

The DU addition request may be shown in Table 6.

**Table 6**

| **IE/Group Name** |
|---|
| Information type |
| Terminal ID |
| (Slice ID) |
| Protocol layer distribution ID |

| **List of E-RABs Allowed To Be Added** |
|---|
| >E-RAB allowed to be added |
| >>E-RAB ID |
| >>QoS parameter at an E-RAB level |

It can be learned that the DU addition request includes a terminal ID and a corresponding protocol layer distribution ID. Optionally, slice information such as a slice ID may alternatively be included.

Optionally, the DU addition request may further include bearer information. It can be learned from Table 5 that the CU may further add bearer-related information to the DU addition request and send the DU addition request to the DU. The bearer-related information in the example of Table 5 is related information of an evolved UMTS terrestrial radio access network (Evolved UMTS Terrestrial Radio Access Network, E-UTRAN) radio access bearer (E-UTRAN radio access bearer).

When determining the protocol layer distribution manner between the CU and the DU, the CU may alternatively determine the protocol layer distribution manner between the CU and the DU based on a mapping relationship between the bearer information and a protocol layer distribution manner. For example, when E-RAB ID = 0, protocol layer distribution ID = 6; or when E-RAB ID = 1, protocol layer distribution ID = 7.

Optionally, the DU addition request may further include slice information.

When determining the protocol layer distribution manner between the CU and the DU, the CU may determine the protocol layer distribution manner between the CU and the DU based on a mapping relationship between the slice information and a protocol layer distribution manner. For example, when slice ID = 0, protocol layer distribution ID = 6; or when slice ID = 1, protocol layer distribution ID = 7.

The DU addition request may be shown in Table 7.

**Table 7**

| **IE/Group Name** |
|---|
| Information type |
| Terminal ID |
| Slice ID |
| Protocol layer distribution ID |

| **List of E-RABs Allowed To Be Added** |
|---|
| >E-RAB allowed to be added |
| >>E-RAB ID |
| >>QoS parameter at an E-RAB level |

After receiving the DU addition request, the DU can determine the protocol layer distribution manner between the CU and the DU according to the DU addition request.

Optionally, the DU addition request may further include data flow (flow) information.

When determining the protocol layer distribution manner between the CU and the DU, the CU may determine the protocol layer distribution manner between the CU and the DU based on a mapping relationship between the flow information and a protocol layer distribution ID.

The flow information may be a flow ID or a flow parameter. No limitation is imposed herein. For example, when flow ID = 0, protocol layer distribution ID = 6; or when flow ID = 1, protocol layer distribution ID = 7.

The DU addition request may be shown in Table 8.

**Table 8**

| **IE/Group Name** |
|---|
| Information type |
| Terminal ID |

| **List of Flows Allowed To Be Added** |
|---|
| >Flow allowed to be added |
| >>Flow ID or flow parameter |
| >>Protocol layer distribution ID |

It can be learned that the DU addition request includes flow information and a corresponding protocol layer distribution ID. After receiving the DU addition request, the DU can determine the protocol layer distribution manner between the CU and the DU according to the DU addition request.

It should be noted that the flow parameter herein may be a QoS parameter corresponding to each data flow, in other words, referring to the QoS parameter shown in Table 3.

Based on the foregoing embodiment, the first protocol layer distribution information includes uplink protocol layer distribution information and downlink protocol layer distribution information.

A form of the uplink protocol layer distribution information is the same as that of the downlink protocol layer distribution information. Two pieces of information may be carried with reference to the foregoing carrying method, and each piece of information includes an uplink identifier or a downlink identifier.

For example, the uplink protocol layer distribution information includes an uplink identifier and a mapping relationship between quality level information and protocol layer distribution information. The downlink protocol layer distribution information includes a downlink identifier and a mapping relationship between quality level information and protocol layer distribution information.

Alternatively, in a message that carries the uplink protocol layer distribution information and the downlink protocol layer distribution information, the uplink protocol layer distribution information and the downlink protocol layer distribution information are arranged in a preset order, and the uplink protocol layer distribution information is followed by the downlink protocol layer distribution information. For example, the DU addition request carries two protocol distribution indications. A first protocol distribution indication is used to indicate an uplink protocol layer distribution, and a second protocol layer distribution indication is used to indicate a downlink protocol layer distribution. No limitation is imposed herein.

Further, the CU may further add the first protocol layer distribution information to a data packet. The first protocol layer distribution information includes the downlink protocol layer distribution information.

Optionally, the first protocol layer distribution information includes a first protocol layer distribution indication, and the first protocol layer distribution indication is used to indicate, to the DU, a protocol layer distribution manner used by the current data packet. The first protocol layer distribution indication may be a protocol layer distribution ID.

This manner is usually applicable to downlink data transmission. After determining the protocol layer distribution manner between the CU and the DU, the CU first processes data by using a protocol layer distributed to the CU, and then sends data to the DU. The DU determines the protocol layer distribution manner between the CU and the DU based on the first protocol layer distribution information in the data packet, and enables a protocol layer entity distributed to the DU to process data.

For example, if the protocol layer distribution manner determined by the CU is "4" in Table 1, that is, "a low-RLC layer and a layer above the low-RLC layer are distributed to the CU, and all layers below the low-RLC layer are distributed to the DU", the CU processes to-be-processed data at "an RRC layer to the low-RLC layer", and then packetizes the to-be-processed data into a data packet. The data packet carries "protocol layer distribution ID = 4". After receiving the data packet, the DU first parses the data packet to obtain "protocol layer distribution ID = 4", and then processes the to-be-processed data at "a high-MAC layer to a low-PHY layer".

The first protocol layer distribution information may be carried in a header of the data packet. Correspondingly, the CU further receives a data packet sent by the DU, and the data packet carries second protocol layer distribution information.

The second protocol layer distribution information includes the second protocol layer distribution indication used to indicate, to the CU, a protocol layer distribution manner used by the current data packet. The second protocol layer distribution indication may be a protocol layer distribution ID.

Based on the foregoing embodiment, an enabled function at each protocol layer may be further flexibly adjusted.

The CU determines a to-be-enabled function at each protocol layer, and generates function indication information. The CU sends the function indication information to the DU, and the DU enables, based on the function indication information, a function corresponding to each protocol layer.

Likewise, after determining the to-be-enabled function at each protocol layer, the CU also adjusts a function enabled at a protocol layer distributed to the CU.

For example, an RLC layer includes a function of cascading, segmenting, or reassembling an RLC service data unit (Service Data Unit, SDUs). For an enhanced mobile broadband (enhanced Mobile Broadband, eMBB) service in new radio (New RAT, NR), the function may need to be disabled at the RLC and implemented at a MAC layer. For a massive machine type communications (Massive Machine Type Communications, mMTC) service, the function may also be disabled at the RLC in case of uncommon small-packet transmission. The RLC does not need the function for an ultra-reliable and low-latency communications (Ultra-reliable and Low Latency Communications, URLLC) service.

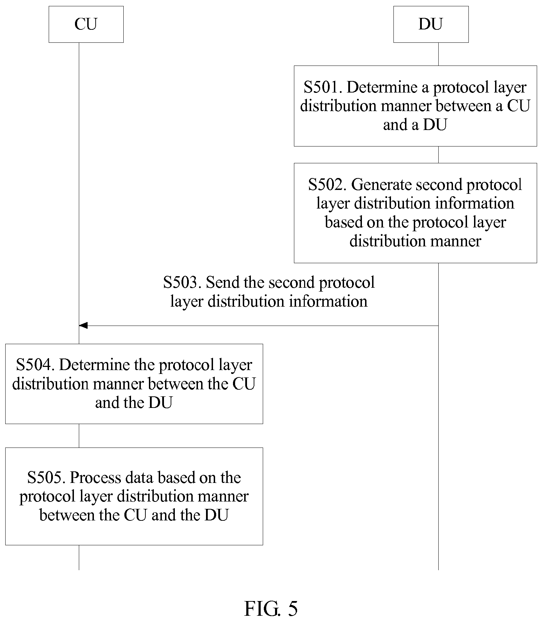

FIG. 5 is a schematic flowchart of another protocol layer distribution indication method according to this invention. A protocol layer distribution manner between a CU and a DU is determined by the DU. After determining the protocol layer distribution manner, the DU notifies the CU of the protocol layer distribution manner. As shown in FIG. 5, the method includes the following steps:
S501. The DU determines the protocol layer distribution manner between the CU and the DU.
S502. The DU generates second protocol layer distribution information based on the protocol layer distribution manner between the CU and the DU.
S503. The DU sends the second protocol layer distribution information to the CU.
S504. The CU determines the protocol layer distribution manner between the CU and the DU based on the second protocol layer distribution information.
S505. The CU processes data based on the protocol layer distribution manner between the CU and the DU.

In this embodiment, the DU sends the second protocol layer distribution information to the CU, to notify the CU of the protocol layer distribution manner between the CU and the DU. In this case, the protocol layer distribution manner is dynamically determined, and dynamically notified to the CU. The CU and the DU may flexibly change a protocol layer distribution in a timely manner.

For a specific interaction process, refer to FIG. 4. Details are not described herein again.

The second protocol layer distribution information may be carried in an interface setup response. Specifically, the second protocol layer distribution information includes a mapping relationship between quality level information and protocol layer distribution information; and
after bearer setup between the CU and the DU is completed, the CU may determine a corresponding QCI based on a current QoS parameter, and further obtain corresponding protocol layer distribution information based on the mapping relationship between the QCI and the protocol layer distribution information, so as to determine the protocol layer distribution manner; or
the second protocol layer distribution information includes a mapping relationship between slice information and protocol layer distribution information; and
after bearer setup between the CU and the DU is completed, the CU may determine a protocol layer distribution manner based on specific slice information and the mapping relationship between the slice information and the protocol layer distribution information, and process data based on the protocol layer distribution manner.

An implementation of the protocol layer distribution manner is similar to that in the foregoing embodiment. Details are not described herein again.

Optionally, the second protocol layer distribution information may be carried in a DU addition response.

Optionally, the second protocol layer distribution information may include a second protocol layer distribution indication, and the second protocol layer distribution indication is used to indicate a currently used protocol layer distribution manner to the CU.

The second protocol layer distribution indication may be the protocol layer distribution identifier (protocol layer distribution ID) shown in Table 1, or may be other information used to indicate the protocol layer distribution identifier. No limitation is imposed herein.

Optionally, the DU may determine the protocol layer distribution manner based on a terminal to be served. To be specific, the DU may determine the protocol layer distribution manner based on an identifier of the terminal to be served and a mapping relationship between the terminal and a protocol layer distribution manner. For example, when terminal ID = 0, protocol layer distribution ID = 4; or when terminal ID = 1, protocol layer distribution ID = 5.

The DU addition response further includes information about the terminal to be served, for example, the ID of the terminal to be served.

Optionally, when determining the protocol layer distribution manner between the CU and the DU, the DU may alternatively determine the protocol layer distribution manner between the CU and the DU based on a mapping relationship between bearer information and a protocol layer distribution manner. For example, when E-RAB ID = 0, protocol layer distribution ID = 6; or when E-RAB ID = 1, protocol layer distribution ID = 7.

Optionally, the DU addition response may further include bearer information.

Optionally, when determining the protocol layer distribution manner between the CU and the DU, the DU may determine the protocol layer distribution manner between the CU and the DU based on a mapping relationship between slice information and a protocol layer distribution manner. For example, when slice ID = 0, protocol layer distribution ID = 6; or when slice ID = 1, protocol layer distribution ID = 7.

Optionally, when determining the protocol layer distribution manner between the CU and the DU, the DU may determine the protocol layer distribution manner between the CU and the DU based on a mapping relationship between flow information and a protocol layer distribution ID.

The flow information may be a flow ID or a flow parameter. No limitation is imposed herein. For example, when flow ID = 0, protocol layer distribution ID = 6; or when flow ID = 1, protocol layer distribution ID = 7.

Optionally, the DU addition response may further include data flow (flow) information.

The second protocol layer distribution information includes uplink protocol layer distribution information and downlink protocol layer distribution information. This is similar to the first protocol layer distribution information. Details are not described herein again.

Optionally, the second protocol layer distribution information may be carried in a data packet. The DU sends the data packet to the CU, and the data packet carries the second protocol layer distribution information. In this case, the second protocol layer distribution information includes uplink protocol layer distribution information.

Optionally, the DU receives a data packet sent by the CU, and the data packet carries first protocol layer distribution information. In this case, the first protocol layer distribution information includes downlink protocol layer distribution information.

For a specific implementation process, refer to the foregoing method embodiment. Details are not described herein again.

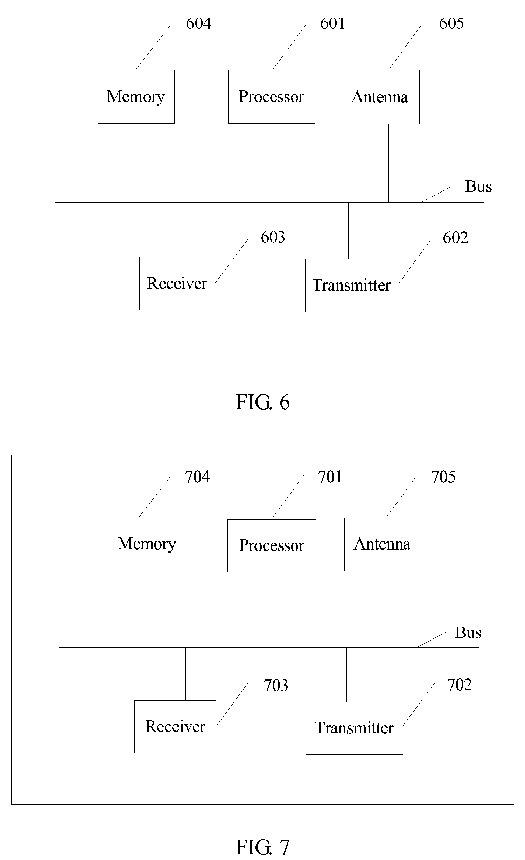

FIG. 6 is a schematic structural diagram of a protocol layer distribution indication apparatus according to this application. The apparatus may be integrated into the foregoing CU. As shown in FIG. 6, the apparatus includes a processor 601, a transmitter 602, a receiver 603, a memory 604, and an antenna 605.

The memory 604, the transmitter 602, the receiver 603, and the processor 601 may be connected by using a bus. Certainly, in actual application, the memory 604, the transmitter 602, the receiver 603, and the processor 601 may not be of a bus structure, but may be of another structure such as a star-shaped structure. This is not specifically limited in this application.

Optionally, the processor 601 may be specifically a general-purpose central processing unit or an ASIC, may be one or more integrated circuits configured to control program execution, may be a hardware circuit developed by using an FPGA, or may be a baseband processor.

Optionally, the processor 601 may include at least one processing core.

Optionally, the memory 604 may include one or more of a ROM, a RAM, and a magnetic disk memory. The memory 604 is configured to store data and/or an instruction required when the processor 601 runs. There may be one or more memories 604.

The apparatus may be configured to perform any method in the foregoing method embodiments. Details are as follows.

The processor 601 is configured to: determine a protocol layer distribution manner between a central unit CU and a distributed unit DU, and generate first protocol layer distribution information based on the protocol layer distribution manner.

The transmitter 602 is configured to send the first protocol layer distribution information to the DU.

In this embodiment, the CU determines the protocol layer distribution manner between the CU and the DU, further generates the first protocol layer distribution information based on the protocol layer distribution manner, and sends the first protocol layer distribution information to the DU, so that the protocol layer distribution manner can be dynamically determined, and dynamically notified to the DU. The DU may also change a protocol layer distribution in a timely manner based on the received first protocol layer distribution information.

The transmitter 602 is specifically configured to send an interface setup request to the DU, where the interface setup request includes the first protocol layer distribution information.

Optionally, the first protocol layer distribution information includes a mapping relationship between quality level information and protocol layer distribution information.

Optionally, the first protocol layer distribution information includes a mapping relationship between slice information and protocol layer distribution information.

Optionally, the processor 601 is specifically configured to: determine the protocol layer distribution manner between the CU and the DU based on a mapping relationship between the CU and a protocol layer distribution manner; or determine the protocol layer distribution manner between the CU and the DU based on a mapping relationship between the DU and a protocol layer distribution manner.

The transmitter 602 is specifically configured to send a DU addition request to the DU, where the DU addition request includes the first protocol layer distribution information.

Optionally, the first protocol layer distribution information includes a first protocol layer distribution indication, and the first protocol layer distribution indication is used to indicate a currently used protocol layer distribution manner to the DU.

Optionally, the DU addition request further includes information about a terminal to be served. Optionally, the first protocol layer distribution information includes uplink protocol layer distribution information and downlink protocol layer distribution information.

The transmitter 602 is specifically configured to send a data packet to the DU, where the data packet includes the first protocol layer distribution information, and the first protocol layer distribution information includes downlink protocol layer distribution information.

The first protocol layer distribution information includes a first protocol layer distribution indication, and the first protocol layer distribution indication is used to indicate, to the DU, a protocol layer distribution manner used by the data packet.

Optionally, the receiver 603 is configured to receive a data packet sent by the DU, where the data packet includes second protocol layer distribution information, and the second protocol layer distribution information includes uplink protocol layer distribution information.

The second protocol layer distribution information includes a second protocol layer distribution indication, and the second protocol layer distribution indication is used to indicate, to the DU, a protocol layer distribution manner used by the data packet.

Optionally, the processor 601 is further configured to: determine a to-be-enabled function at each protocol layer, and generate function indication information.

The transmitter 602 is further configured to send the function indication information to the DU.

The apparatus is configured to execute the method embodiments executed by the foregoing terminal, and an implementation principle and a technical effect of the apparatus are similar to those of the method embodiment. For related content, refer to the method embodiments. Details are not described herein again.

FIG. 7 is a schematic structural diagram of another protocol layer distribution indication apparatus according to this application. The apparatus may be integrated into the foregoing DU. As shown in FIG. 7, the apparatus includes a processor 701, a transmitter 702, a receiver 703, a memory 704, and an antenna 705.

The memory 704, the transmitter 702, the receiver 703, and the processor 701 may be connected by using a bus. Certainly, in actual application, the memory 704, the transmitter 702, the receiver 703, and the processor 701 may not be of a bus structure, but may be of another structure such as a star-shaped structure. This is not specifically limited in this application.

Optionally, the processor 701 may be specifically a general-purpose central processing unit or an ASIC, may be one or more integrated circuits configured to control program execution, may be a hardware circuit developed by using an FPGA, or may be a baseband processor.

Optionally, the processor 701 may include at least one processing core.

Optionally, the memory 704 may include one or more of a ROM, a RAM, and a magnetic disk memory. The memory 704 is configured to store data and/or an instruction required when the processor 701 runs. There may be one or more memories 704.

The apparatus may be configured to perform any method in the foregoing method embodiments. Details are as follows.

The receiver 703 is configured to receive first protocol layer distribution information sent by a central unit CU.

The processor 701 is configured to: determine a protocol layer distribution manner between the CU and a distributed unit DU based on the first protocol layer distribution information, and process data based on the protocol layer distribution manner between the CU and the DU. Optionally, the receiver 703 is specifically configured to receive an interface setup request sent by the CU, where the interface setup request includes the first protocol layer distribution information.

Optionally, the receiver 703 is specifically configured to receive a DU addition request sent by the CU, where the DU addition request includes the first protocol layer distribution information. Optionally, the first protocol layer distribution information includes a first protocol layer distribution indication, and the first protocol layer distribution indication is used to indicate a currently used protocol layer distribution manner to the DU.

Optionally, the receiver 703 is specifically configured to receive a data packet sent by the CU, where the data packet includes the first protocol layer distribution information, and the first protocol layer distribution information includes downlink protocol layer distribution information. Optionally, the transmitter 702 is further configured to send a data packet to the CU, where the data packet includes second protocol layer distribution information, and the second protocol layer distribution information includes uplink protocol layer distribution information.

In another embodiment, referring to FIG. 7, the processor 701 is configured to: determine a protocol layer distribution manner between the CU and a DU, and generate second protocol layer distribution information based on the protocol layer distribution manner.

The transmitter 702 is configured to send the second protocol layer distribution information to the CU.

Optionally, the transmitter 702 sends an interface setup response to the CU, where the interface setup response includes the second protocol layer distribution information.

Optionally, the transmitter 702 sends a DU addition response to the CU, where the DU addition response includes the second protocol layer distribution information.

The apparatus is configured to execute the method embodiments executed by the foregoing terminal, and an implementation principle and a technical effect of the apparatus are similar to those of the method embodiment. For related content, refer to the method embodiments. Details are not described herein again.

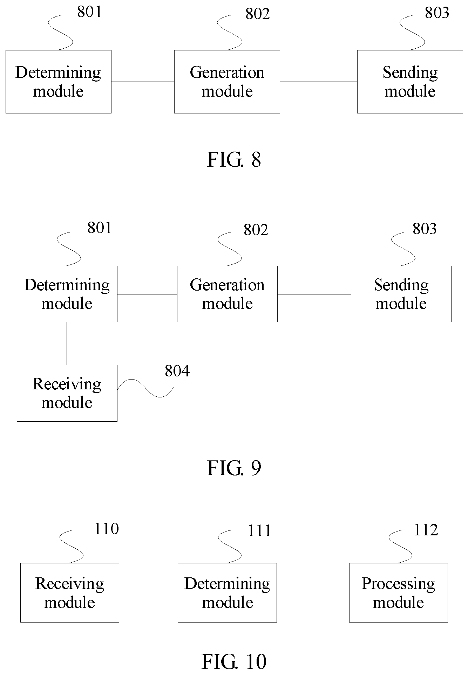

FIG. 8 is a schematic structural diagram of another protocol layer distribution indication apparatus according to this application. The apparatus may be integrated into the foregoing CU. As shown in FIG. 8, the apparatus includes a determining module 801, a generation module 802, and a sending module 803.

The determining module 801 is configured to determine a protocol layer distribution manner between a central unit CU and a distributed unit DU.

The generation module 802 is configured to generate first protocol layer distribution information based on the protocol layer distribution manner.

The sending module 803 is configured to send the first protocol layer distribution information to the DU.

Optionally, the sending module 803 is specifically configured to send an interface setup request to the DU, where the interface setup request includes the first protocol layer distribution information.

Optionally, the determining module 801 is specifically configured to: determine the protocol layer distribution manner between the CU and the DU based on a mapping relationship between the CU and a protocol layer distribution manner; or determine the protocol layer distribution manner between the CU and the DU based on a mapping relationship between the DU and a protocol layer distribution manner.

The first protocol layer distribution information includes a mapping relationship between quality level information and protocol layer distribution information.

Optionally, the first protocol layer distribution information includes a mapping relationship between slice information and protocol layer distribution information.

The sending module 803 is specifically configured to send a DU addition request to the DU, where the DU addition request includes the first protocol layer distribution information.

The first protocol layer distribution information includes a first protocol layer distribution indication, and the first protocol layer distribution indication is used to indicate a currently used protocol layer distribution manner to the DU.

The sending module 803 is specifically configured to send a data packet to the DU, where the data packet includes the first protocol layer distribution information, and the first protocol layer distribution information includes downlink protocol layer distribution information.

The first protocol layer distribution information includes a first protocol layer distribution indication, and the first protocol layer distribution indication is used to indicate, to the DU, a protocol layer distribution manner used by the data packet.

FIG. 9 is a schematic structural diagram of another protocol layer distribution indication apparatus according to this application. Based on FIG. 8, the apparatus may further include: a receiving module 804, configured to receive a data packet sent by the DU, where the data packet includes second protocol layer distribution information, and the second protocol layer distribution information includes uplink protocol layer distribution information.

Optionally, the determining module 801 is further configured to: determine a to-be-enabled function at each protocol layer, and generate function indication information. The sending module 803 sends the function indication information to the DU.

The apparatus is configured to execute the method embodiments executed by the foregoing terminal, and an implementation principle and a technical effect of the apparatus are similar to those of the method embodiment. For related content, refer to the method embodiments. Details are not described herein again.

FIG. 10 is a schematic structural diagram of another protocol layer distribution indication apparatus according to this application. The apparatus may be integrated into the foregoing DU. As shown in FIG. 10, the apparatus includes a receiving module 110, a determining module 111, and a processing module 112.

The receiving module 110 is configured to receive first protocol layer distribution information sent by a central unit CU.

The determining module 111 is configured to determine a protocol layer distribution manner between the CU and a distributed unit DU based on the first protocol layer distribution information.

The processing module 112 is configured to process data based on the protocol layer distribution manner between the CU and the DU.

Optionally, the receiving module 110 is specifically configured to receive an interface setup request sent by the CU, where the interface setup request includes the first protocol layer distribution information.

Optionally, the receiving module 110 is specifically configured to receive a DU addition request sent by the CU, where the DU addition request includes the first protocol layer distribution information.

The first protocol layer distribution information includes a first protocol layer distribution indication, and the first protocol layer distribution indication is used to indicate a currently used protocol layer distribution manner to the DU.

The receiving module 110 is specifically configured to receive a data packet sent by the CU, where the data packet includes the first protocol layer distribution information, and the first protocol layer distribution information includes downlink protocol layer distribution information. Optionally, the apparatus may further include a sending module, configured to send a data packet to the CU, where the data packet includes second protocol layer distribution information, and the second protocol layer distribution information includes uplink protocol layer distribution information. The second protocol layer distribution information includes a second protocol layer distribution indication, and the second protocol layer distribution indication is used to indicate, to the CU, a protocol layer distribution manner used by the data packet.

The receiving module 110 receives function indication information sent by the CU, where the function indication information is used to indicate a to-be-enabled function at each protocol layer.

The apparatus is configured to execute the method embodiments executed by the foregoing terminal, and an implementation principle and a technical effect of the apparatus are similar to those of the method embodiment. For related content, refer to the method embodiments. Details arc not described herein again.

In the several embodiments provided in this application, it should be understood that the disclosed apparatus and method may be implemented in other manners. For example, the described apparatus embodiment is merely an example. For example, the unit division is merely logical function division and may be other division in actual implementation. For example, a plurality of units or components may be combined or integrated into another system, or some features may be ignored or may not be performed. In addition, the displayed or discussed mutual couplings or direct couplings or communication connections may be implemented by using some interfaces. The indirect couplings or communication connections between the apparatuses or units may be implemented in electrical, mechanical, or other forms.

The units described as separate parts may or may not be physically separate, and parts displayed as units may or may not be physical units, may be located in one position, or may be distributed to a plurality of network units. Some or all of the units may be selected according to actual requirements to achieve the objectives of the solutions of the embodiments.

In addition, functional units in the embodiments of this application may be integrated into one processing unit, or each of the units may exist alone physically, or two or more units are integrated into one unit. The integrated unit may be implemented in a form of hardware, or may be implemented in a form of hardware in addition to a software functional unit.

When the foregoing integrated unit is implemented in a form of a software functional unit, the integrated unit may be stored in a computer-readable storage medium. The software functional unit is stored in a storage medium and includes several instructions for instructing a computer device (which may be a personal computer, a server, a network device, or the like) or a processor (English: processor) to perform some of the steps of the methods described in the embodiments of this application. The foregoing storage medium includes any medium that can store program code, such as a USB flash drive, a removable hard disk, a read-only memory (English: Read-Only Memory, ROM), a random access memory (English: Random Access Memory, RAM), a magnetic disk, or an optical disc.

Finally, it should be noted that the scope of the invention is defined by the appended claims.

## Claims

1. A protocol layer distribution indication method applied to a cloud radio access network, C-RAN, architecture, comprising:
determining, by a distributed unit DU in the C-RAN, a protocol layer distribution manner between a central unit CU and the DU in the C-RAN;
generating, by the DU, protocol layer distribution information based on the protocol layer distribution manner, wherein the protocol layer distribution information comprises uplink protocol layer distribution information and downlink protocol layer distribution information; and
sending, by the DU, the protocol layer distribution information to the CU, wherein the sending, by the DU, the protocol layer distribution information to the CU comprises:
sending, by the DU, a DU addition request to the CU, wherein the DU addition request comprises the protocol layer distribution information.

2. The method according to claim 1, wherein the protocol layer distribution information comprises a protocol layer distribution indication, and the protocol layer distribution indication is used to indicate a currently used protocol layer distribution manner to the CU.

3. The method according to claim 1, wherein the DU addition request further comprises information about a terminal to be served.

4. The method according to claim 1, wherein the sending, by the DU, the protocol layer distribution information to the CU comprises:
sending, by the DU, a data packet to the CU, wherein the data packet comprises the protocol layer distribution information, and the protocol layer distribution information comprises uplink protocol layer distribution information.

5. The method according to claim 4, wherein the protocol layer distribution information comprises a protocol layer distribution indication, and the protocol layer distribution indication is used to indicate, to the CU, a protocol layer distribution manner used by the data packet.

6. The method according to claim 1, wherein the method further comprises:
receiving, by the DU, a data packet sent by the CU, wherein the data packet comprises a further protocol layer distribution information, and the further protocol layer distribution information comprises downlink protocol layer distribution information.

7. A protocol layer distribution indication method applied to a cloud radio access network, C-RAN, architecture, comprising:
receiving, by a central unit CU in the C-RAN, protocol layer distribution information sent by a distributed unit DU in the C-RAN, wherein the protocol layer distribution information comprises uplink protocol layer distribution information and downlink protocol layer distribution information, wherein the receiving, by the CU, the protocol layer distribution information sent by the DU comprises:
receiving, by the CU, a DU addition request sent by the DU, wherein the DU addition request comprises the protocol layer distribution information;
determining, by the CU, a protocol layer distribution manner between the CU and the DU based on the protocol layer distribution information; and
processing, by the CU, data based on the protocol layer distribution manner between the CU and the DU.

## Patentansprüche

1. Verfahren zur Anzeige von Protokollschicht-Teilung, angewendet auf eine "Cloud Radio Access Network"-, C-RAN-, Architektur, umfassend:
Bestimmen, durch eine "Distributed Unit", DU, im C-RAN, einer Protokollschicht-Teilungsart zwischen einer "Central Unit", CU, und der DU im C-RAN;
Erzeugen, durch die DU, von Protokollschicht-Teilungsinformationen auf der Grundlage der Protokollschicht-Teilungsart, wobei die Protokollschicht-Teilungsinformationen Uplink-Protokollschicht-Teilungsinformationen und Downlink-Protokollschicht-Teilungsinformationen umfassen; und
Senden, durch die DU, der Protokollschicht-Teilungsinformationen an die CU, wobei das Senden, durch die DU, der Protokollschicht-Teilungsinformationen an die CU umfasst:
Senden, durch die DU, einer DU-Hinzufügungsanforderung an die CU, wobei die DU-Hinzufügungsanforderung die Protokollschicht-Teilungsinformationen umfasst.

2. Verfahren nach Anspruch 1, wobei die Protokollschicht-Teilungsinformationen eine Protokollschicht-Teilungsanzeige umfassen und die Protokollschicht-Teilungsanzeige dazu verwendet wird, der CU eine aktuell verwendete Protokoll schicht-Teilungsart anzuzeigen.

3. Verfahren nach Anspruch 1, wobei die DU-Hinzufügungsanforderung ferner Informationen über ein zu bedienendes Endgerät umfasst.

4. Verfahren nach Anspruch 1, wobei das Senden, durch die DU, der Protokollschicht-Teilungsinformationen an die CU umfasst:
Senden, durch die DU, eines Datenpakets an die CU, wobei das Datenpaket die Protokollschicht-Teilungsinformationen umfasst und die Protokollschicht-Teilungsinformationen Uplink-Protokollschicht-Teilungsinformationen umfassen.

5. Verfahren nach Anspruch 4, wobei die Protokollschicht-Teilungsinformationen eine Protokollschicht-Teilungsanzeige umfassen und die Protokollschicht-Teilungsanzeige dazu verwendet wird, der CU eine vom Datenpaket verwendete Protokollschicht-Teilungsart anzuzeigen.

6. Verfahren nach Anspruch 1, wobei das Verfahren ferner umfasst:
Empfangen, durch die DU, eines von der CU gesendeten Datenpakets, wobei das Datenpaket weitere Protokollschicht-Teilungsinformationen umfasst und die weiteren Protokollschicht-Teilungsinformationen Downlink-Protokollschicht-Teilungsinformationen umfassen.

7. Verfahren zur Anzeige von Protokollschicht-Teilung, angewendet auf eine "Cloud Radio Access Network"-, C-RAN-, Architektur, umfassend:
Empfangen, durch eine "Central Unit", CU, im C-RAN, von Protokollschicht-Teilungsinformationen, die von einer "Distributed Unit", DU, im C-RAN gesendet werden, wobei die Protokollschicht-Teilungsinformationen Uplink-Protokollschicht-Teilungsinformationen und Downlink-Protokollschicht-Teilungsinformationen umfassen, wobei das Empfangen, durch die CU, der von der DU gesendeten Protokollschicht-Teilungsinformationen umfasst:
Empfangen, durch die CU, einer von der DU gesendeten DU-Hinzufügungsanforderung, wobei die DU-Hinzufügungsanforderung die Protokollschicht-Teilungsinformationen umfasst;
Bestimmen, durch die CU, einer Protokollschicht-Teilungsart zwischen der CU und der DU auf der Grundlage der Protokollschicht-Teilungsinformationen; und
Verarbeiten, durch die CU, von Daten auf der Grundlage der Protokollschicht-Teilungsart zwischen der CU und der DU.

## Revendications

1. Procédé d'indication de distribution de couche de protocole appliqué à une architecture de réseau d'accès radio en nuage, C-RAN, comprenant :
la détermination, par une unité distribuée DU dans le C-RAN, d'une manière de distribution de couche de protocole entre une unité centrale CU et la DU dans le C-RAN;
la génération, par la DU, d'informations de distribution de couche de protocole sur la base de la manière de distribution de couche de protocole, les informations de distribution de couche de protocole comprenant des informations de distribution de couche de protocole de liaison montante et des informations de distribution de couche de protocole de liaison descendante ; et
l'envoi, par la DU, des informations de distribution de couche de protocole à la CU, l'envoi, par la DU, des informations de distribution de couche de protocole à la CU comprenant :
l'envoi, par la DU, d'une requête d'ajout de DU à la CU, la requête d'ajout de DU comprenant les informations de distribution de couche de protocole.

2. Procédé selon la revendication 1, dans lequel les informations de distribution de couche de protocole comprennent une indication de distribution de couche de protocole, et l'indication de distribution de couche de protocole est utilisée pour indiquer une manière de distribution de couche de protocole actuellement utilisée à la CU.

3. Procédé selon la revendication 1, dans lequel la requête d'ajout de DU comprend en outre des informations concernant un terminal devant être desservi.

4. Procédé selon la revendication 1, dans lequel l'envoi, par la DU, des informations de distribution de couche de protocole à la CU comprend :
l'envoi, par la DU, d'un paquet de données à la CU, le paquet de données comprenant les informations de distribution de couche de protocole, et les informations de distribution de couche de protocole comprenant des informations de distribution de couche de protocole de liaison montante.

5. Procédé selon la revendication 4, dans lequel les informations de distribution de couche de protocole comprennent une indication de distribution de couche de protocole, et l'indication de distribution de couche de protocole est utilisée pour indiquer, à la CU, une manière de distribution de couche de protocole utilisée par le paquet de données.

6. Procédé selon la revendication 1, le procédé comprenant en outre :
la réception, par la DU, d'un paquet de données envoyé par la CU, le paquet de données comprenant des informations de distribution de couche de protocole supplémentaires, et les informations de distribution de couche de protocole supplémentaires comprenant des informations de distribution de couche de protocole de liaison descendante.

7. Procédé d'indication de distribution de couche de protocole appliqué à une architecture de réseau d'accès radio en nuage, C-RAN, comprenant :
la réception, par une unité centrale CU dans le C-RAN, d'informations de distribution de couche de protocole envoyées par une unité distribuée DU dans le C-RAN, les informations de distribution de couche de protocole comprenant des informations de distribution de couche de protocole de liaison montante et des informations de distribution de couche de protocole de liaison descendante, la réception, par la CU, des informations de distribution de couche de protocole envoyées par la DU comprenant :
la réception, par la CU, d'une requête d'ajout de DU envoyée par la DU, la requête d'ajout de DU comprenant les informations de distribution de couche de protocole ;
la détermination, par la CU, d'une manière de distribution de couche de protocole entre la CU et la DU sur la base des informations de distribution de couche de protocole ; et
le traitement, par la CU, de données sur la base de la manière de distribution de couche de protocole entre la CU et la DU.
